# EUROPEAN PATENT APPLICATION

(11) **EP 4 207 486 A1**
(43) Date of publication of application: **05.07.2023**
(21) Application number: 21870943.4
(22) Date of filing: 06.07.2021
(51) Int. Cl.: H01Q 1/22

(54) **ELECTRONIC DEVICE AND ELECTRONIC DEVICE CONTROL METHOD**

(30) Priority: 22.09.2020 CN 202011003489
(71) Applicant: GUANGDONG OPPO MOBILE TELECOMMUNICATIONS CORP., LTD., Dongguan, Guangdong 523860 (CN)
(72) Inventor: TANG, Xiaoqiang, Dongguan, Guangdong 523860 (CN)
(74) Representative: Manitz Finsterwald Patent- und Rechtsanwaltspartnerschaft mbB
(86) International application number: PCT/CN2021/104684
(87) International publication number: WO 2022/062564

(57) **Abstract**

An electronic device and an electronic device control method. The electronic device comprises a flexible screen assembly, a first carrier, a second carrier, and a first antenna radiator which is configured on the second carrier. The flexible screen assembly can be switched between a folded state and an unfolded state as the first carrier and the second carrier slide relative to each other, when the second carrier is distant from the first carrier, the flexible screen assembly is in the unfolded state, and the first antenna radiator transmits a wireless signal.

## Description

This application claims priority to Chinese Patent Application No. 202011003489.X, filed on September 22, 2020 in the National Intellectual Property Administration of China, and entitled "ELECTRONIC DEVICE AND ELECTRONIC DEVICE CONTROL METHOD", the contents of which are herein incorporated by reference in their entireties.

### TECHNICAL FIELD

The present disclosure relates to the field of antennas, and in particular, to an electronic device and an electronic device control method.

### BACKGROUND

With the development of electronic device technology, electronic devices such as smart phones and tablet computers are playing an increasingly important role in people's daily life and realizing more and more functions. In order to ensure the realization of various functions of an electronic device, multiple antennas need to be installed inside the electronic device.

### SUMMARY

Embodiments of the present disclosure provide an electronic device and an electronic device control method, which may ensure the radiation performance of the antenna.

In a first aspect, an embodiment of the present disclosure provides an electronic device. The electronic device includes a first carrier, a second carrier, a flexible screen assembly, and a first antenna radiator. The second carrier is slidably connected to the first carrier and movable towards or away from the first carrier, the flexible screen assembly has a first end and a second end opposite to the first end. The first end of the flexible screen assembly is arranged on the first carrier, the second end of the flexible screen assembly is arranged on the second carrier, and the flexible screen assembly is switchable between a folded state and an unfolded state as the first carrier and the second carrier move towards or move away from each other. The first antenna radiator is arranged on the second carrier. When the second carrier is away from the first carrier and the flexible screen assembly is in the unfolded state, the first antenna radiator is enabled to transmit a wireless signal.

In a second aspect, an embodiment of the present disclosure provides an electronic device control method, which is applied to the electronic device. The electronic device includes a flexible screen assembly, a first carrier, a second carrier slidably connected to the first carrier, and an antenna radiator disposed on the second carrier. The flexible screen assembly is switchable between a folded state and an unfolded state as the first carrier and the second carrier slide relative to each other. The electronic device control method includes: obtaining the unfolded state or the folded state of the flexible screen assembly; and enabling the first antenna radiator to transmit a wireless signal when the flexible screen assembly is in the unfolded state.

### BRIEF DESCRIPTION OF THE DRAWINGS

In order to more clearly illustrate the technical solutions in the embodiments of the present disclosure, the following briefly introduces the drawings needed in the description of the embodiments. Obviously, the drawings in the following description are only some embodiments of the present disclosure, and those skilled in the art can also obtain other drawings according to these drawings without creative efforts.
FIG. 1 is a first structural schematic view of an electronic device according to an embodiment of the present disclosure.
FIG. 2 is a second structural schematic view of an electronic device according to an embodiment of the present disclosure.
FIG. 3 is a third structural schematic view of an electronic device according to an embodiment of the present disclosure.
FIG. 4 is a first cross-sectional structural schematic view of the electronic device shown in FIG. 1 along the direction of P1-P2.
FIG. 5 is a first cross-sectional structural schematic view of the electronic device shown in FIG. 3 along the direction of M1-M2.
FIG. 6 is a structural schematic view of the electrical connector shown in FIG. 4.
FIG. 7 is a first structural schematic view of the first carrier and the second carrier shown in FIG. 5.
FIG. 8 is a fourth structural schematic view of an electronic device according to an embodiment of the present disclosure.
FIG. 9 is a fifth structural schematic view of an electronic device according to an embodiment of the present disclosure.
FIG. 10 is a structural schematic view of a detection assembly according to an embodiment of the present disclosure.
FIG. 11 is a first schematic flowchart of an electronic device control method according to an embodiment of the present disclosure.
FIG. 12 is a second schematic flowchart of an electronic device control method according to an embodiment of the present disclosure.
FIG. 13 is a third schematic flowchart of an electronic device control method according to an embodiment of the present disclosure.
FIG. 14 is a fourth schematic flowchart of an electronic device control method according to an embodiment of the present disclosure.

### DETAILED DESCRIPTION

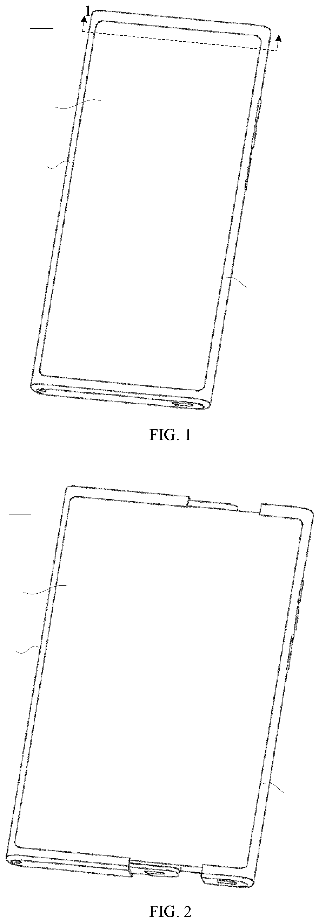

The technical solutions in the embodiments of the present disclosure will be clearly and completely described below in conjunction with accompanying FIGs. 1 to 14 in the embodiments of the present disclosure. Apparently, the described embodiments are only some but not all of the embodiments of the present disclosure. Based on the embodiments in the present disclosure, all other embodiments obtained by those skilled in the art without making creative efforts belong to the scope of protection of the present disclosure.

Embodiments of the present disclosure provide an electronic device and an electronic device control method. The electronic device control method may be applied to an electronic device, in other words, the electronic device control method may be executed by the electronic device provided in the embodiments of the present disclosure. As shown in FIG. 1, FIG. 1 is a first structural schematic view of an electronic device according to an embodiment of the present disclosure. The electronic device 100 shown in FIG. 1 may be a computing device such as a laptop computer, a computer monitor including an embedded computer, a tablet computer, a cellular phone, a media player, or other handheld or portable electronic devices, smaller devices (such as wrist watch devices, hanging devices, headphones or earpiece devices, devices embedded in glasses or other devices worn on the user's head, or other wearable or micro devices), a television, a computer display without embedded computers, a game device, a navigation device, an embedded system (such as systems in which electronic devices with displays are installed in kiosks or cars), devices that performs the functions of two or more of these devices or others. In the exemplary configuration of FIG. 1, the electronic device 100 is a portable device, such as a cellular phone, a media player, a tablet computer, or other portable computing devices. If needed, other configurations may be configured for the electronic device 100. The example of FIG. 1 is illustrative only.

As shown in FIG. 1, the electronic device 100 may include a first carrier 10, a second carrier 20, and a flexible screen assembly 30. A first end of the flexible screen assembly 30 may be fixedly connected to the first carrier 10, and a second end of the flexible screen assembly 30 opposite to the first end may be fixedly connected to the second carrier 20. For example, the second end of the flexible screen assembly 30 may be fixedly connected to the second carrier 20 directly, or the second end of the flexible screen assembly 30 may also be fixedly connected to the second carrier 20 through a connecting member (such as a driving belt, a driving rack). The first carrier 10 and the second carrier 20 may play a role as supporting the flexible screen assembly 30. The first carrier 10 and the second carrier 20 are slidably connected to each other so that the first carrier 10 and the second carrier 20 may move in the direction of approaching or moving away from each other, and thus the flexible screen assembly 30 may be switched between a first state and a second state.

The first state may be one of an unfolded state, an intermediate state, and a folded state. The second state may also be one of the unfolded state, the intermediate state, and the folded state. Besides, the first state is different from the second state. Therefore, the flexible screen assembly 30 may be switched between any two states of the unfolded state, the intermediate state, and the folded state.

As shown in FIG. 1, the folded state may be a state finally formed by the relative movement of the first carrier 10 and the second carrier 20 in the direction of approaching each other. In some embodiments, the electronic device 100 may include a first side and a second side opposite to each other. The first side may be the front side of the electronic device 100, and the second side may be the back side of the electronic device 100. When the flexible screen assembly 30 is in the folded state, a part of the flexible screen assembly 30 may be located on the first side of the electronic device 100, and a part of the flexible screen assembly 30 may be located on the second side of the electronic device 100.

FIG. 2 is a second structural schematic view of an electronic device according to an embodiment of the present disclosure. As shown in FIG. 2, the intermediate state may be a state formed by the relative movement of the first carrier 10 and the second carrier 20 in the direction of moving away from each other so that the flexible screen assembly 30 is simultaneously exposed from the first side and the second side of the electronic device 100.

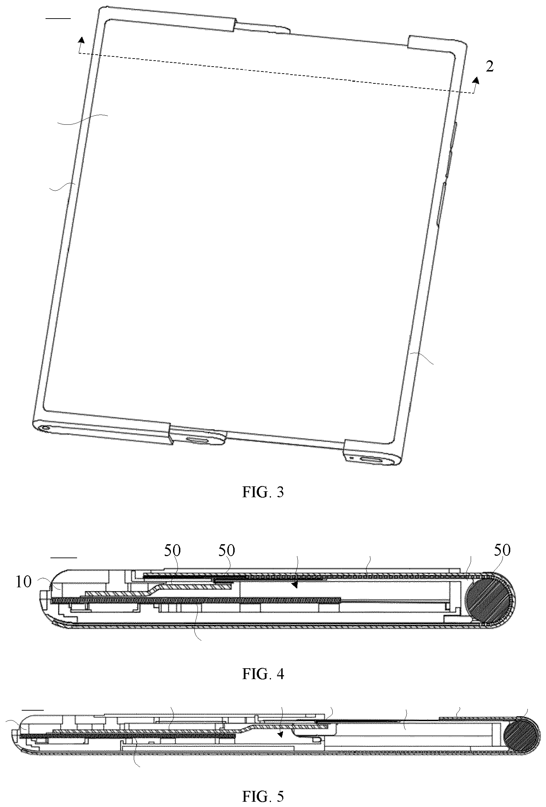

FIG. 3 is a third structural schematic view of an electronic device according to an embodiment of the present disclosure. As shown in FIG. 3, the unfolded state refers to a state in which the first carrier 10 and the second carrier 20 relatively move away from each other so that most of the flexible screen assembly 30 is exposed from the first side of the electronic device 100.

It may be understood that, when the first carrier 10 and the second carrier 20 are in the intermediate state, the first carrier 10 and the second carrier 20 are in a partially unfolded and partially folded state, in which a part of the first/second carrier is unfolded while the remaining part of the first/second carrier is folded. Therefore, the intermediate state of the first carrier 10 and the second carrier 20 may be considered as the unfolded state or the folded state.

It may be understood that, the intermediate state of the first carrier 10 and the second carrier 20 may have various forms. For example, the maximum moving distance of the first carrier 10 and the second carrier 20 in the direction away from each other is H, the first carrier 10 and the second carrier 20 in the folded state may move away from each other, so as to reach an intermediate state in which different distances such as one-quarter of H, one-half of H, and three-quarters of H are formed between the first carrier 10 and the second carrier 20. The states with gradually farther distances may be sequentially defined as a first intermediate state, a second intermediate state, a third intermediate state, and so on.

It may be understood that, when the first carrier 10 and the second carrier 20 are in the first intermediate state, for example, the first carrier 10 and the second carrier 20 may move away from each other for a distance of 1/4H to reach the first intermediate state, the first carrier 10 and the second carrier 20 may still move away from each other to reach the second intermediate state, for example, the first carrier 10 and the second carrier 20 may move away from each other for a distance of 1/2 H to reach the second intermediate state. It should be noted that one or more intermediate states of the first carrier 10 and the second carrier 20 in the embodiments of the present disclosure are only illustrative, and the intermediate state of the first carrier 10 and the second carrier 20 is not limited in the embodiments of the present disclosure.

It should be understood that in the description of the present disclosure, terms such as "first" and "second" are only used to distinguish similar objects, and cannot be taken as indicating or implying relative importance or implicitly indicating the indicated number of technological features.

FIG. 4 is a cross-sectional structural schematic view of the electronic device shown in FIG. 1 along the direction of P 1-P2, and FIG. 5 is cross-sectional structural schematic view of the electronic device shown in FIG. 3 along the direction of M1-M2. As shown in FIG. 4 and FIG. 5 in conjunction with FIG. 1 to FIG.3, the electronic device 100 in the embodiments of the present disclosure may further include a circuit board 40 and a first antenna radiator 50.

The circuit board 40 may be directly or indirectly connected to the first carrier 10. For example, the first carrier 10 includes a bottom plate and a side frame, and the circuit board 40 may be directly disposed on the bottom plate. For another example, the circuit board 40 may be indirectly connected to the first carrier 10 through a bracket.

It may be understood that the circuit board 40 may be the main board of the electronic device 100. The circuit board 40 may be integrated with one, two or more of the following electronic components such as microphone, speaker, receiver, earphone interface, universal serial bus interface (USB interface), camera assembly, distance sensor, environment sensor, and gyroscope. These integrated electronic components will affect the radiation performance of the antenna.

The first antenna radiator 50 may be electrically connected to the circuit board 40. For example, a radio frequency circuit may be arranged on the circuit board 40, and the first antenna radiator 50 may be electrically connected to the radio frequency circuit. The radio frequency circuit may feed a signal to the first antenna radiator 50 and may receive a signal transmitted by the first antenna radiator 50, so that the first antenna radiator 50 may transmit a wireless signal.

The first antenna radiator 50 may also be directly or indirectly connected to the second carrier 20. For example, the second carrier 20 may include a top plate and a side frame, and the first antenna radiator 50 may be directly disposed on the top plate. For another example, the first antenna radiator 50 may also be indirectly connected to the second carrier 20 through a bracket. When the second carrier 20 and the first carrier 10 move relatively toward each other or away from each other, the first antenna radiator 50 and the circuit board 40 may also move relatively toward each other or away from each other.

As shown in FIG. 4, when the second carrier 20 and the first carrier 10 are close to each other so that the flexible screen assembly 30 is in the folded state, the first antenna radiator 50 will also be driven by the second carrier 20 to get close to the first carrier 10. Thus, the distance between the first antenna radiator 50 and the first carrier 10 is relatively short, and the first antenna radiator 50 may be easily interfered by the electronic components arranged on the first carrier 10. The clearance area of the first antenna radiator 50 is small, and the radiation performance of the first antenna radiator 50 is poor.

In some embodiments, the first antenna radiator 50, driven by the second carrier 20, and the circuit board 40, driven by the first carrier 10, may also approach or move towards each other. As a result, the distance between the first antenna radiator 50 and the circuit board 40 is relatively short, and the first antenna radiator 50 may be easily interfered by the electronic components integrated on the circuit board 40.

As shown in FIG. 5, when the second carrier 20 and the first carrier 10 move toward each other so that the flexible screen assembly 30 is in the unfolded state, the first antenna radiator 50 may also be driven by the second carrier 20 and keep away from the first carrier 10. In this case, the distance between the first antenna radiator 50 and the first carrier 10 is relatively long, and the electronic device 100 may control or enable the first antenna radiator 50 to transmit a wireless signal. The first antenna radiator 50 cannot be easily affected by the electronic components arranged on the first carrier 10. The clearance area of the first antenna radiator 50 is larger, and the radiation performance of the first antenna radiator 50 is better.

In some embodiments, the first antenna radiator 50, driven by the second carrier 20, and the circuit board 40, driven by the first carrier 10, may also keep away from each other. In this case, the distance between the first antenna radiator 50 and the circuit board 40 is relatively long, and the first antenna radiator 50 may be enabled to transmit a wireless signal.

According to the electronic device 100 in the embodiments of the present disclosure, the first antenna radiator 50 is disposed on the second carrier 20 and may move close to or away from the first carrier 10 along with the relative movement between of the second carrier 20 and the first carrier 10. When the first antenna radiator 50 moves away from the first carrier 10 along with the second carrier 20, the distance between the first antenna radiator 50 and the first carrier 10 is relatively long. In this case, the first antenna radiator 50 is enabled to transmit a wireless signal. The first antenna radiator 50 is less likely to be interfered by the electronic components integrated on the first carrier 10. The radiation environment of the first antenna radiator 50 is better, ensuring that the first antenna radiator 50 has better radiation performance.

As shown in FIG. 4 and FIG. 5 again, when the first antenna radiator 50 moves under the drive of the second carrier 20, the first antenna radiator 50 may be electrically connected to the circuit board 40 through an electrical connector 41. One end of the electrical connector 41 is electrically connected to the circuit board 40, and the other end of the electrical connector 41 is electrically connected to the first antenna radiator 50. The radio frequency circuit on the circuit board 40 may feed a wireless signal to the first antenna radiator 50 through the electrical connector 41.

It may be understood that, when the first carrier 10 and the second carrier 20 move relatively to each other, the electrical connector 41 may move synchronously with the first antenna radiator 50 and be switched between a stretching state and a contracting state. For example, when the first carrier 10 and the second carrier 20 are away from each other, the electrical connector 41 may be in the stretching state; and when the first carrier 10 and the second carrier 20 are close to each other, the electrical connector 41 may be in the folded state.

It may be understood that the electrical connector 41 may be a coaxial cable, so as to be electrically connected to the first antenna radiator 50 and the circuit board 40. The electrical connector 41 may also be a flexible circuit board, so as to be electrically connected to the first antenna radiator 50 and the circuit board 40. The electrical connector 41 may also be a liquid crystal polymer (LCP) connector, so as to be electrically connected to the first antenna radiator 50 and the circuit board 40.

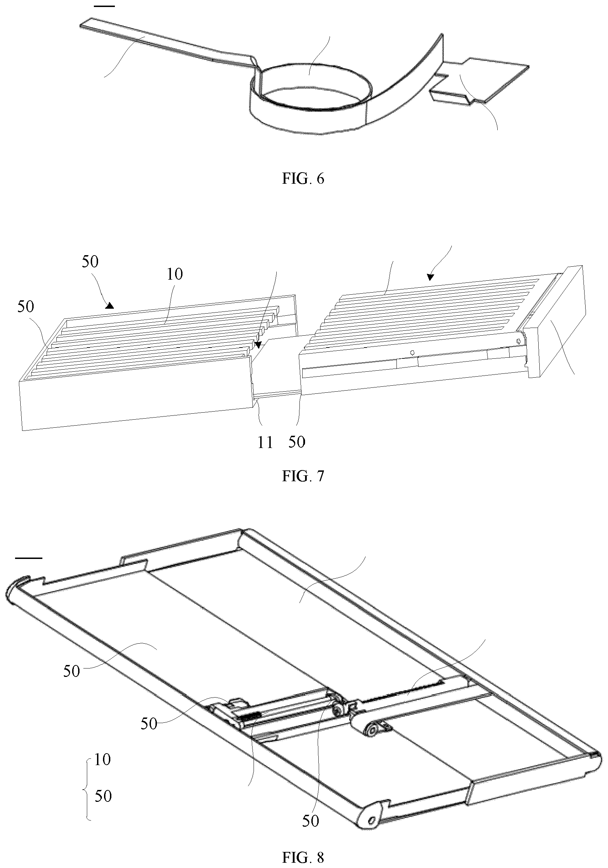

FIG. 6 is a structural schematic view of the electrical connector shown in FIG. 4. As shown in FIG. 6 in conjunction with FIG. 4 and FIG. 5, in order to strengthen the electrical connection between the electrical connector 41 and the first antenna radiator 50, the electrical connector 41 may include a first electrical connecting part 411, a rotating part 412, and a second electrical connecting part 413 connected in sequence. One end of the first electrical connecting part 411 is electrically connected to the circuit board 40, and the other end of the first electrical connecting part 411 is connected to the rotating part 412. One end of the second electrical connecting part 413 is electrically connected to the first antenna radiator 50, and the other end of the second electrical connecting part 413 is connected to the rotating part 412.

During the movement of the second carrier 20, the first electrical connecting part 411 may be stationary, and the second electrical connecting part 413 and the rotating part 412 may be rotatable along with the second carrier 20. In some embodiments, the rotating part 412 may rotate around its rotation center, and rotate from a first helical shape to a second helical shape, or from the second helical shape to the first helical shape. The number of turns of the first helical shape is less than that of the second helical shape. For example, when the second carrier 20 and the first carrier 10 move relatively in the direction away from each other, the rotating part 412 may rotate from the second helical shape to the first helical shape; and when the second carrier 20 and the first carrier 10 move relatively in the direction close to each other, the rotating part 412 may rotate from the first helical shape to the second helical shape.

According to the electronic device 100 in the embodiments of the present disclosure, the first electrical connecting part 411 is stationary, and the second electrical connecting part 413 and the rotating part 412 may rotate along with the second carrier 20, so that the electrical connecting part 41 may form a torsion spring structure, and the rotating part 412 may change between the first helical shape and the second helical shape during the rotation process. On the one hand, due to the torsion spring structure, the rotating part 412 may create a reversed buffer resistance to the movement of the second carrier 20, stabilizing the electrical connection between the first antenna radiator 50 and the second electrical connecting part 413. On the other hand, only the number of turns of the rotating part 412 changes during the movement, and the rotating part 412 will not be randomly laid in the first carrier 10 due to its stretch or contraction. The space occupied by the electrical connector 41 in the embodiments of the present disclosure is more regular, which benefits the design of the internal structure of the electronic device 100.

FIG. 7 is a first structural schematic view of the first carrier and the second carrier shown in FIG. 5. As further shown in FIG. 4, FIG. 5 and FIG. 7, the first carrier 10 may include a first bottom plate 11, a first side wall 12, and a first top plate 13 connected in sequence, and the first side wall 12 may be connected to the first bottom plate 11 and the first top plate 13, respectively. The second carrier 20 may include a second bottom plate 21, a second side wall 22, and a second top plate 23 connected in sequence, and the second side wall 22 may be connected to the second bottom plate 21 and the second top plate 23, respectively. Moreover, the first top plate 13, the second top plate 23, the first bottom plate 11, the second bottom board 21, the first side wall 12, and the second side wall 22 may cooperatively enclose to form or define an accommodating space 101.

It may be understood that a slide rail may be arranged on the first side wall 12, and a slide block may be arranged on the second side wall 22. When the slide block of the second carrier 20 slides in the slide rail of the first carrier 10, the first carrier 10 is slidably connected to the second carrier 20. Thus, the second carrier 20 and the first carrier 10 may move relatively in the direction of approaching or moving away from each other.

It may be understood that the first top plate 13 of the first carrier 10 and the second top plate 23 of the second carrier 20 may be comb-tooth structures engaged with each other, so that when the second carrier 20 and the first carrier 10 move relatively, the first top plate 13 and the second top plate 23 may be engaged with each other or separated from each other. The comb-tooth structures result in that: on the one hand, the first top plate 13 and the second top plate 23 will not block the movement of the first carrier 10 and the second carrier 20; on the other hand, the comb-tooth structures may also play a position limiting role so that the first carrier 10 and the second carrier 20 are not easy to deviate from the preset sliding track.

It may be understood that FIG. 7 is only an illustrative example of the first carrier 10 and the second carrier 20. Other schemes such as the drawer-type structure formed by the first carrier 10 or the second carrier 20 may also meet the requirements of the embodiments of the present disclosure. For example, the first carrier 10 does not include the first top plate 13, and the second carrier 20 does not include the second top plate 23. Or the first carrier 10 does not include the first bottom plate 11, and the second carrier 20 does not include the second bottom plate 21. In some embodiments, the first carrier 10 and the second carrier 20 may cooperatively constitute a drawer-type configuration, which can also meet the requirements of the present disclosure. The embodiments of the present disclosure do not limit the specific structures of the first carrier 10 and the second carrier 20.

The first end of the flexible screen assembly 30 may be arranged on the outer surface of the first top plate 13 of the first carrier 10, and the flexible screen assembly 30 may extend or stretch across the outer surface of the first top plate 13 and the second top plate 23 of the second carrier 20, and then extend to surround the outer surface of the second side wall 22 of the second carrier 20, and further extend above the second bottom plate 21 of the second carrier 20, so that the second end of the flexible screen assembly 30 is arranged on the outer surface of the second bottom plate 21.

The first antenna radiator 50 may be disposed on the outer surface of the second bottom plate 21. It may be understood that the part where the first antenna radiator 50 is connected to the second bottom plate 21 may be different from the part where the flexible screen assembly 30 is connected to the second bottom plate 21, so that the first antenna radiator 50 will not interfere with the movement of flexible screen assembly 30 along with the second carrier 20.

It may be understood that the outer surface of the first bottom plate 11 may refer to the surface of the first bottom plate 11 away from the accommodating space 101, the outer surface of the second bottom plate 21 may refer to the surface of the second bottom plate 21 away from the accommodating space 101, the outer surface of the second side wall 22 may refer to the surface of the second side wall 22 away from the accommodating space 101, and the outer surface of the second bottom plate 23 may refer to the surface of the second bottom plate 23 away from the accommodating space 101.

According to the electronic device 100 in the embodiments of the present disclosure, the first antenna radiator 50 is arranged on the outer surface of the second bottom plate 21 of the second carrier 20, so that the first antenna radiator 50 is disposed closer to the outside of the electronic device 100 in space, which facilitates the first antenna radiator 50 to radiate a wireless signal.

As shown in FIG. 4 and FIG. 5 again, as shown in FIG. 4, when the flexible screen assembly 30 is in the first state such as the folded state or the intermediate state, the flexible screen assembly 30 may cover the first antenna radiator 50. The so-called covering the first antenna radiator 50 refers to that the projection of the first antenna radiator 50 projected on the flexible screen assembly 30 is in the flexible screen assembly 30. In this case, due to the influence of the internal circuits of the flexible screen assembly 30, the first antenna radiator 50 will be interfered. As shown in FIG. 5, when the flexible screen assembly 30 is in the second state such as the unfolded state or the intermediate state, the flexible screen assembly 30 may be staggered away from the first antenna radiator 50. The so-called staggering away from the first antenna radiator 50 refers to that one end of the flexible screen assembly 30 connected to the second carrier 20 is spaced from the first antenna radiator 50, and the projections of the first antenna radiator 50 and one end of the flexible screen assembly 30 connected to the second carrier 20 projected on the electronic device 100 do not overlap or intersect with each other.

According to the electronic device 100 in the embodiments of the present disclosure, when the flexible screen assembly 30 is in the unfolded state, the second end of the flexible screen assembly 30 and the first antenna radiator 50 are staggered from each other. On the one hand, the distance between the first antenna radiator 50 and the circuit board 40 is relatively long, so the first antenna radiator 50 is less interfered by the electronic components on the circuit board 40. On the other hand, the distance between the first antenna radiator 50 and the flexible screen assembly 30 is also relatively long, so the first antenna radiator 50 is less interfered by the flexible screen assembly 30. Thus, the first antenna radiator 50 may be enabled to transmit a wireless signal, the radiation performance of the first antenna radiator 50 may be improved, and which facilitates the first antenna radiator 50 to transmit a wireless signal.

In order to further improve the radiation performance of the first antenna radiator 50, the circuit board 40 may be arranged in the accommodating space 101, while the first antenna radiator 50 may be arranged outside the accommodating space 101. For example, the circuit board 40 may be fixedly connected to the inner surface of the first bottom plate 11. Herein, the inner surface refers to the surface of the first bottom plate 11 located in the accommodating space 101. The first antenna radiator 50 may be arranged outside the accommodating space 101. For example, the first antenna radiator 50 may be fixedly connected to the outer surface of the second bottom plate 21; herein, the outer surface refers to the surface of the second bottom plate 21 located outside the accommodating space 101.

In this case, the circuit board 40 is arranged inside the accommodating space 101, while the first antenna radiator 50 is arranged outside the accommodating space 101. Compared to the solution that both of the circuit board 40 and the first antenna radiator 50 are arranged in the accommodating space 101, in the solution in the embodiments of the present disclosure, the distance between the circuit board 40 and the first antenna radiator 50 is increased by at least the thickness of the first carrier 10/second carrier 20, resulting in a longer distance between the first antenna radiator 50 and the circuit board 40. Therefore, the interference of the electronic components on the circuit board 40 to the first antenna radiator 50 may be further reduced, and the radiation performance of the first antenna radiator 50 may be improved.

FIG. 8 is a fourth structural schematic view of an electronic device according to an embodiment of the present disclosure. As shown in FIG. 8, the electronic device 100 in the embodiments of the present disclosure may further include a driving mechanism 60. The driving mechanism 60 may be configured to drive the first carrier 10 and the second carrier 20 to move relatively in the direction of approaching or moving away from each other.

As shown in FIG. 8, the drive mechanism 60 may include a motor 61, a screw rod 62, a nut 63, and a push rod 64. The motor 61 and the screw rod 62 may be connected to the first carrier 10, the nut 63 may be sleeved on the screw rod 62, and balls may be filled between the nut 63 and the screw rod 62, so that the screw rod 62 and the nut 63 may form a screw-rod reciprocating structure. The push rod 64 is connected to the nut 63 and the second carrier 20.

When the motor 61 drives the screw rod 62 to rotate, the nut 63 may linearly reciprocate relatively to the screw rod 62. Since the push rod 64 is connected to both of the nut 63 and the second carrier 20, the nut 63 may also drive the push rod 64 and the second carrier 20 to reciprocate relatively to the screw rod 62. Since the screw rod 62 is fixedly connected to the first carrier 10, the driving mechanism 60 may realize the relative movement of the first carrier 10 and the second carrier 20 in the direction of approaching or moving away from each other.

It may be understood that the driving mechanism 60 in the embodiments of the present disclosure may also have other structures; for example, the driving mechanism 60 may include the combination of a motor, a gear, and a rack. The motor and the gear may be arranged on the first carrier 10, and the rack may be arranged on the second carrier 20. The motor may drive the gear, the gear and the rack may engage with each other, so that the motor may drive the gear to move, and the gear may drive the rack and the second carrier 20 to move. Thus, the driving mechanism 60 may drive the second carrier 20 and the first carrier 10 to move relatively in the direction of approaching or moving away from each other.

It may be understood that the driving mechanism 60 in the embodiments of the present disclosure may also be a user's manual pulling force. In other words, the user may manually pull the first carrier 10 and the second carrier 20 so as to achieve relative movement of the first carrier 10 and the second carrier 20 in the direction of approaching or moving away from each other.

It may be understood that, the above is only an example of the driving mechanism 60 in the embodiments of the present disclosure, and the structure of the driving mechanism 60 in the embodiments of the present disclosure is not limited thereto. Other solutions that may realize that the driving mechanism 60 drives the first carrier 10 and the second carrier 10 to achieve the relative movement in the direction of approaching each other or moving away from each other is within the protection scope of the embodiments of the present disclosure.

According to the electronic device 100 in the embodiments of the present disclosure, the driving mechanism 60 adopts a combination of the motor 61, the screw rod 62, the nut 63, and the push rod 64. Since the nut 63 realizes reciprocating movement relatively to the screw rod 62 under the drive of the balls, the screw rod 62 is subjected to a small frictional resistance, resulting a small frictional resistance between the first carrier 10 and the second carrier 20 during the movement. Therefore, the movement of the first carrier 10 and the second carrier 20 is smoother and more stable, guaranteeing a better user experience.

As shown in FIG. 4 and FIG. 5 again, the electronic device 100 in the embodiments of the present disclosure may further include a rotating shaft 65 arranged on the second carrier 20. One end of the flexible screen assembly 30 is arranged on the first carrier 10, and the other end of the flexible screen assembly 30 surrounds or extends around the rotating shaft 65 and is connected to the second carrier 20. The flexible screen assembly 30 may be connected to the driving mechanism 60. When the driving mechanism 60 drives the first carrier 10 and the second carrier 20 to move relatively to each other, the rotating shaft 65 may rotate along with the flexible screen assembly 30. The flexible screen assembly 30 may move around the rotating shaft 65, realizing its switch from the first state to the second state.

In some embodiments, as shown in FIG. 4, FIG. 5 and FIG. 8, teeth may be arranged on the push rod 64 of the drive mechanism 60, and the flexible screen assembly 30 may be engaged with the push rod 64 through a rack. When the drive mechanism 60 drives the second carrier 20 to move relatively to each other, the push rod 64 of the driving mechanism 60 may also drive the flexible screen assembly 30 to move around the rotating shaft 65. Then the flexible screen assembly 30 may be unfolded and folded to realize the switch between the first state and the second state.

It may be understood that the rotating shaft 65 may be a rotating shaft structure with teeth on the outside, and the flexible screen assembly 30 may be linked with the rotating shaft 65 through the teeth engagement or the like. The rotating shaft 65 may also be a round shaft without teeth, and the flexible screen assembly 30 may surround or extend around the rotating shaft 65 and be linked with the rotating shaft 65 through friction. When the first carrier 10 and the second carrier 20 move relatively, the second carrier 20 drives the flexible screen assembly 30 to move, and the flexible screen assembly 30 drives the rotating shaft 65 linked with the flexible screen assembly 30 to rotate, so that the flexible screen assembly 30 may be folded or unfolded around the rotating shaft 65.

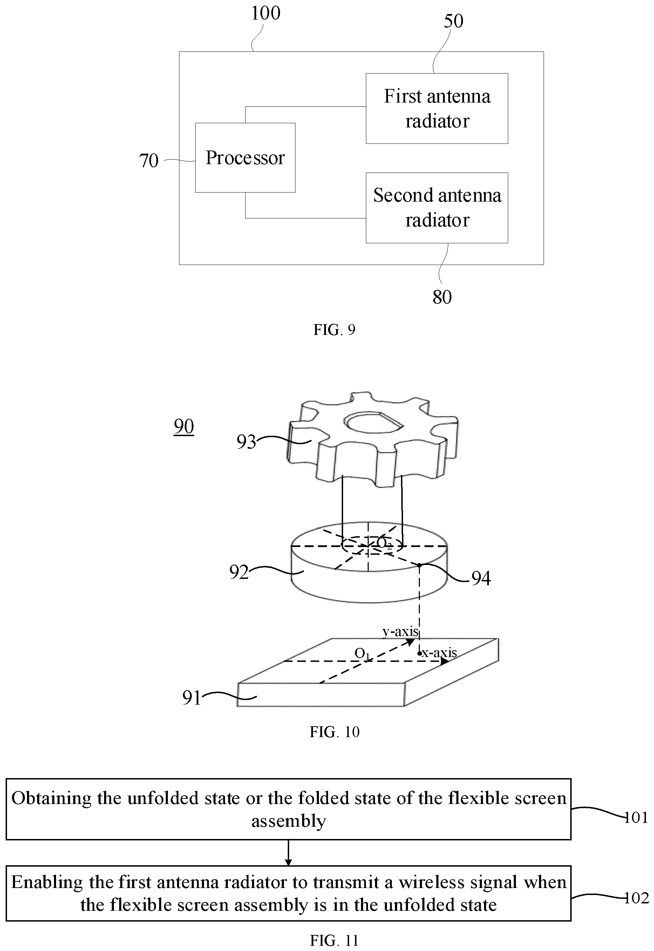

FIG. 9 is a fifth structural schematic view of an electronic device according to an embodiment of the present disclosure. As shown in FIG. 9 in conjunction with FIG. 4 and FIG. 5, the electronic device 100 in the embodiments of the present disclosure may further include a processor 70. The processor 70 may be disposed on the circuit board 40 or on another main board. The processor 70 may be electrically connected to the first antenna radiator 50 to control the working state of the first antenna radiator 50, such as enabling the first antenna radiator 50 to transmit a wireless signal, or not to transmit a wireless signal.

It may be understood that, when the flexible screen assembly 30 is in the unfolded state, the first antenna radiator 50 and the first carrier 10 are away from each other, and the processor 70 may enable the first antenna radiator 50 to transmit a wireless signal.

In some embodiments, the processor 70 may control the working state of the first antenna radiator 50 according to the first current distance between the first antenna radiator 50 and the circuit board 40. For example, if the first current distance is greater than or equal to a first distance threshold, the distance between the first antenna radiator 50 and the circuit board 40 is relatively long, and the first antenna radiator 50 is less interfered by the circuit board 40, so the processor 70 may enable the first antenna radiator 50 to transmit a wireless signal. If the first current distance is less than the first distance threshold, the distance between the first antenna radiator 50 and the circuit board 40 is relatively short, and the first antenna radiator 50 is more interfered by the circuit board 40, so the processor 70 may control the first antenna radiator 50 not to transmit a wireless signal (i.e., disenable the first antenna radiator 50 to transmit a wireless signal) or enable the first antenna radiator 50 to transmit a wireless signal as an auxiliary antenna.

According to the electronic device 100 in the embodiments of the present disclosure, the first current distance between the first antenna radiator 50 and the circuit board 40 may directly reflect the distance between the first antenna radiator 50 and the circuit board 40, and the processor 70 may enable the first antenna radiator 50 to transmit a wireless signal when the first current distance is greater than or equal to the first distance threshold. Therefore, the interference between the first antenna radiator 50 and the circuit board 40 may be greatly reduced, and the processor 70 may accurately enable the first antenna radiator 50 to transmit a wireless signal.

In some embodiments, the processor 70 may control the working state of the first antenna radiator 50 according to the second current distance between the first end and the second end of the flexible screen assembly 30. For example, if the second current distance is greater than or equal to a second distance threshold, the flexible screen assembly 30 is in the unfolded state, and the distance between the first antenna radiator 50 and the first carrier 10 is relatively long, then the processor 70 may enable the first antenna radiator 50 to transmit a wireless signal. If the second current distance is less than the second distance threshold, the flexible screen assembly 30 is in the folded state, and the distance between the first antenna radiator 50 and the first carrier 10 is relatively short, then the processor 70 may control the first antenna radiator 50 not to transmit a wireless signal (i.e., disenable the first antenna radiator 50 to transmit a wireless signal) or enable the first antenna radiator 50 to transmit a wireless signal as the auxiliary antenna.

It may be understood that the processor 70 may also control the first antenna radiator 50 not to transmit a wireless signal or enable the first antenna radiator 50 to transmit a wireless signal as the auxiliary antenna when the flexible screen assembly 30 is in the first state and covers the first antenna radiator 50. The processor 70 may also enable the first antenna radiator 50 to transmit a wireless signal when the flexible screen assembly 30 is in the second state and is staggered from the first antenna radiator 50, for example, enabling the first antenna radiator 50 to act as the main antenna to radiate a wireless signal.

According to the electronic device 100 in the embodiments of the present disclosure, the processor 70 may control the working state of the first antenna radiator 50 based on the second current distance between the first end and the second end of the flexible screen assembly 30, the processor 70 may not only reduce the interference between the first antenna radiator 50 and the circuit board 40 , but also reduce the interference between the first antenna radiator 50 and the flexible screen assembly 30, so as to further improve the radiation performance of the electronic device 100.

In some embodiments, the processor 70 may also control the working state of the first antenna radiator 50 based on a rotation parameter of the rotating shaft 65 such as the rotation direction and the number of turns of rotation. For example, if the rotating shaft 65 rotates clockwise, the flexible screen assembly 30 is in the unfolded state under the drive of the rotating shaft 65, and the distance between the first antenna radiator 50 and the first carrier 10 is relatively long, so the processor 70 may enable the first antenna radiator 50 to transmit a wireless signal. If the rotating shaft 65 rotates counterclockwise, the flexible screen assembly 30 is in the folded state under the drive of the rotating shaft 65, and the distance between the first antenna radiator 50 and the first carrier 10 is relatively short, so the first antenna radiator 50 may be controlled by the processor 70 not to transmit a wireless signal, or be enabled to transmit a wireless signal as the auxiliary antenna.

According to the electronic device 100 in the embodiments of the present disclosure, the processor 70 may enable the first antenna radiator 50 to transmit a wireless signal based on the rotation parameter of the rotating shaft 65, such as the rotation direction. Since the rotation direction or the number of turns of rotation of the rotating shaft 65 is easy for measurement, based on the rotation parameter, the movement trend (unfolding or folding) of the first carrier 10 and the second carrier 20 may be quickly predicted by the processor 70, and then the working state of the first antenna radiator 50 may be quickly controlled by the processor 70 to improve the control efficiency on the first antenna radiator 50.

As shown in FIG. 9, the electronic device 100 in the embodiments of the present disclosure may further include a second antenna radiator 80. The second antenna radiator 80 may be disposed on the first carrier 10, for example, on the frame of the first carrier 10 or inside the first carrier 10. The processor 70 may be electrically connected to the second antenna radiator 80, and may also control the working state of the second antenna radiator 80.

It may be understood that the processor 70 may also control the working states of the first antenna radiator 50 and the second antenna radiator 80 based on the first current distance between the first antenna radiator 50 and the circuit board 40. For example, when the first current distance between the first antenna radiator 50 and the circuit board 40 is greater than or equal to the first distance threshold, the processor 70 may enable the first antenna radiator 50 to transmit a wireless signal while the second antenna radiator 80 not to transmit a wireless signal, or enable the first antenna radiator 50 and the second antenna radiator 80 to transmit a wireless signal simultaneously. When the first current distance between the first antenna radiator 50 and the circuit board 40 is less than the first distance threshold, the process 70 may enable the second antenna radiator 80 to transmit a wireless signal and control the first antenna radiator 50 not to transmit a wireless signal (i.e., disenable the first antenna radiator 50 to transmit a wireless signal), or control the first antenna radiator 50 to act as an auxiliary antenna to transmit a wireless signal.

It may be understood that the processor 70 may control the working states of the first antenna radiator 50 and the second antenna radiator 80 according to the second current distance between the first end and the second end of the flexible screen assembly 30. For example, when the second current distance is greater than or equal to the second distance threshold, the processor 70 may enable the first antenna radiator 50 to transmit a wireless signal. When the second current distance is less than the second distance threshold, the processor 70 may enable the second antenna radiator 80 to transmit a wireless signal and control the first antenna radiator 50 not to transmit a wireless signal, or enables the first antenna radiator 50 to transmit a wireless signal as an auxiliary antenna.

It may be understood that the processor 70 may also control the working states of the first antenna radiator 50 and the second antenna radiator 80 according to the state of the flexible screen assembly 30. For example, when the flexible screen assembly 30 is in the first state and covers the first antenna radiator 50, the processor 70 may enable the second antenna radiator 80 to transmit a wireless signal and control the first antenna radiator 50 not to transmit a wireless signal, or enable the first antenna radiator 50 to transmit a wireless signal as an auxiliary antenna. When the flexible screen assembly 30 is in the second state and is staggered from the first antenna radiator 50, the processor 70 may enable the first antenna radiator 50 to transmit a wireless signal while the second antenna radiator 80 not to transmit a wireless signal, or enable the first antenna radiator 50 and the second antenna radiator 80 to transmit a wireless signal simultaneously.

It may be understood that the processor 70 may also control the working states of the first antenna radiator 50 and the second antenna radiator 80 according to the rotation parameter of the rotating shaft 65, such as the rotation direction, and enable the first antenna radiator 50 to transmit a wireless signal if the rotation parameter is within a target parameter range. For example, the target parameter range may be that the rotation direction of the rotating shaft is clockwise. In case where the processor 70 detects that the rotating shaft 65 rotates clockwise, it indicates that the distance between the first antenna radiator 50 and the first carrier 10 is long, and the processor 70 may enable the first antenna radiator 50 to transmit a wireless signal while the second antenna radiator 80 not to transmit a wireless signal, or enable the first antenna radiator 50 and the second antenna radiator 80 to transmit a wireless signal simultaneously. In case where the rotating shaft 65 rotates counterclockwise, it indicates that the distance between the first antenna radiator 50 and the first carrier 10 is relatively short, the processor 70 may enable the second antenna radiator 80 to transmit a wireless signal and control the first antenna radiator 50 not to transmit a wireless signal, or enable the first antenna radiator 50 to transmit a wireless signal as an auxiliary antenna.

It may be understood that, the above is only illustrative examples of the processor 70 controlling the working states of the first antenna radiator 50 and the second antenna radiator 80, and the embodiments of the present disclosure are not limited thereto, and other solutions of the processors 70 controlling the working states of first the antenna radiator 50 and the second antenna radiator 80 are also within the protection scope of the present disclosure.

It may be understood that, the first antenna radiator 50 and the second antenna radiator 80 in the embodiments of the present disclosure may be a laser direct structuring (LDS) antenna, a flexible printed circuit (FPC) board antenna, a printing direct structuring (PDS) antenna, etc. Among them, the LDS antenna refers to the antenna produced by using of laser direct structuring technology. First, a laser may be used to induce modified materials, and then the selective metal plating is directly performed on a substrate medium to form the LDS antenna. The LDS antenna does not need to occupy additional internal space of the electronic device 100, and does not increase additional thickness of electronic devices 100, and may realize the light and thin design of the electronic device 100. The FPC antenna is connected to a signal source through a feeder, and may be attached to the electronic device 100 with adhesive, which is easy to install and low in cost. The PDS antenna, such as a silver paste spraying antenna, may be formed by spraying conductive materials directly on a dielectric substrate. By adopting PDS technology, antennas of any shape may be produced, and the production of antennas is simpler.

It should be noted that the first antenna radiator 50 and the second antenna radiator 80 in the embodiments of the present disclosure are not limited to the above description, for example, they may also be patching antennas, steel sheet antennas, and the like. The embodiments of the present disclosure do not limit the forms of the first antenna radiator 50 and the second antenna radiator 80. It may be understood that, the first antenna radiator 50 and the second antenna radiator 80 in the embodiments of the present disclosure may be antennas of the same type or of different types, which is not limited in the embodiments of the present disclosure.

FIG. 10 is a structural schematic view of a detection assembly according to an embodiment of the present disclosure. As shown in FIG. 10, a solution of the processor 70 controlling the working states of the first antenna radiator 50 and the second antenna radiator 80 is illustrated, the electronic device 100 may also include a detection assembly 90. The detection assembly 90 may detect a current state of the flexible screen assembly 30. The current state includes the unfolded state and the folded state.

The detection assembly 90 may be electrically connected to the circuit board 40, and may detect the first current distance between the first antenna radiator 50 and the circuit board 40, so as to judge whether the flexible screen assembly 30 is in the unfolded state or in the folded state according to the first current distance. The detection assembly 90 may also detect the second current distance between the first end and the second end of the flexible screen assembly 30, so as to judge whether the flexible screen assembly 30 is in the unfolded state or in the folded state according to the second current distance. The detection assembly 90 may also detect the rotation parameter of the rotating shaft 65, such as the rotation direction and the number of turns, so as to judge whether the flexible screen assembly 30 is in the unfolded state or in the folded state according to the rotation parameter.

In some embodiments, as shown in FIG. 10, the detection assembly 90 may include a fixing part 91 and a moving part 92 arranged at intervals or spaced apart from each other, and the fixing part 91 may be directly or indirectly connected to the first carrier 10. For example, the fixing part 91 may be directly connected to the inner surface of the first carrier 10, or connected to the circuit board 40 inside the first carrier 10 to achieve an indirect connection with the first carrier 10. The moving part 92 may be directly or indirectly connected to the flexible screen assembly 30, and may rotate synchronously with the movement of the flexible screen assembly 30. The fixing part 91 may detect the movement state of the moving part 92.

The flexible screen assembly 30 may be engaged with a driven gear 93, and the moving part 92 may be co-axially connected to the driven gear 93. When the flexible screen assembly 30 moves along with the driving mechanism 60, the flexible screen assembly 30 may drive the driven gear 93 to rotate, and the driven gear 93 may in turn drive the moving part 92 to rotate, so that the moving part 92 may follow the movement of the flexible screen assembly 30 to rotate. Since the moving part 92 moves synchronously with the flexible screen assembly 30, a motion parameter of the flexible screen assembly 30 moving with the second carrier 20 may be detected according to the motion state of the moving part 92, and the second current distance between the first end and second end of the flexible screen assembly 30 may be obtained. According to the second current distance, it may be determined that the flexible screen assembly 30 is in the unfolded state or the folded state.

It may be understood that since the first antenna radiator 50 moves along with the second carrier 20, the motion parameter of the flexible screen assembly 30 may also reflect the moving distance of the first antenna radiator 50. In other words, through the cooperation between the above-mentioned fixing part 91 and the moving part 92, the detection assembly 90 may also detect the first current distance between the first antenna radiator 50 and the circuit board 40.

It may be understood that, the moving part 92 is coaxially connected to the driven gear 93, the driven gear 93 rotates along with the flexible screen assembly 30, the rotating shaft 65 also rotates along with the flexible screen assembly 30, and the rotation directions of the rotating shaft 65, the driven gear 93, and the moving part 92 are the same. Therefore, according to the rotation direction of the moving part 92, the rotation parameter such as the rotation direction and the number of turns of rotation of the rotating shaft 65 may be obtained. For example, when the driven gear 93 and the moving part 92 rotate clockwise, the flexible screen assembly 30 is in the unfolded state, and the rotating shaft 65 will also rotate clockwise; and when the driven gear 93 and the moving part 92 rotate counterclockwise, the flexible screen assembly 30 is in the folded state, and the rotating shaft 65 also rotates counterclockwise.

It may be understood that the fixing part 91 may detect the rotation parameter of the moving part 92, and the second current distance between the first end and the second end of the flexible screen assembly 30 may be obtained according to the rotation parameter of the moving part 92. The first current distance between the first antenna radiator 50 and the circuit board 40 and the rotation parameter of the rotating shaft 65 may also be obtained.

In some embodiments, the fixing part 91 may be a Hall angle sensor, and the moving part 92 may be a circular magnet. The fixing part 91 may detect the rotation parameter such as the number of turns of rotation and a rotation angle of the moving part 92 under the drive of the flexible screen assembly 30. According to the rotation parameter, the second current distance between the first end and the second end of the flexible screen assembly 30 may be detected. For example, the second current distance may be calculated according to a formula S1=(2πRA)/360. S1 in the formula is the second current distance between the first end and the second end of the flexible screen assembly 30, R is the radius of the driven gear 93, and A is the rotation angle of the moving part 92. If the moving part 92 rotates two and a half turns when driven by the driven gear 93, then A is 900 degrees, and the second current distance S2=5πR.

It may be understood that the fixing part 91 may detect the position of a marking point 94 on the moving part 92 to determine the rotation parameter of the moving part 92. For example, the fixing part 91 may detect the horizontal and vertical coordinates of the marking point 94, and obtain the rotation angle of the moving part 92 according to the horizontal and vertical coordinates of the marking point 94 when the marking point 94 is at different positions.

It may be understood that a chip, an X-axis sensor, and a Y-axis sensor may be arranged inside the Hall angle sensor. X-axis coordinates of the marking point 94 may be detected by the X-axis sensor, and Y-axis coordinates of the marking point 94 may be detected by the Y-axis sensor, so that the X-axis sensor and the Y-axis sensor may cooperatively construct an X-Y coordinate system, and the coordinate origin O1 is the intersection point of the X-axis sensor and the Y-axis sensor. Moreover, the X-axis sensor and the Y-axis sensor may be electrically connected to the chip respectively, so as to store the detected X-axis coordinates and Y-axis coordinates of the marking point 94 into the chip.

The circular magnet may include equal N poles and S poles, and magnetic force lines of the circular magnet radiate from the central point O2 of the circular magnet to the circumference of the circular magnet. The center point O2 of the circular magnet may be coaxial with the origin O1 of the X-Y coordinate system, and then each magnetic force line of the circular magnet is mapped in the X-Y coordinate system as a radiation line radiating from the origin O1 to the surroundings or the periphery. The starting point of the radiation line is the origin O1, the endpoint of the radiation line falls in the X-Y coordinate system. When the circular magnet rotates by a certain angle and the X-axis sensor and the Y-axis sensor of the Hall angle sensor detect coordinates of the endpoint of one of the target magnetic force lines mapped in the X-Y coordinate system, the rotation angle of the circular magnet may be detected combining with the known initial position of the circular magnet. In some embodiments, assuming that when the circular magnet is in the initial position, the coordinates of an initial end point of the radiation line are (m1, 0). After the circular magnet rotates by a certain angle, the coordinates of the final endpoint of the radiation line are (m2, n), then the rotation angle A is calculated via tan A=n/m2.

It may be understood that the Hall angle sensor may also determine the rotation direction of the circular magnet according to the starting point and the endpoint of the radiation line, and then may obtain the rotation direction of the rotating shaft 65 according to the direction of the circular magnet.

It may be understood that a gap may be set between the circular magnet and the Hall angle sensor to facilitate the distribution of the magnetic force lines. The distance between the circular magnet and the Hall angle sensor may be in a range from 0.5 mm to 2 mm. In this range, the magnetic field distribution of the circular magnet is more stable, and the change of the magnetic field lines detected by the Hall angle sensor is more stable.

It may be understood that the above is only an illustrative example of the detection assembly 90. The detection assembly 90 in the embodiments of the present disclosure may also be implemented by other schemes. For example, the detection assembly 90 may further include a first contact point and a second contact point. The first contact point may be directly or indirectly provided on the first carrier 10, and the second contact point may be directly or indirectly provided on the flexible screen assembly 30. In practice, the positions of the first contact point and the second contact point may be controlled, so that when the first contact point and the second contact point are electrically connected to each other, the flexible screen assembly 30 may be in the second state and staggered from the first antenna radiator 50. Furthermore, when it is detected that the first contact point and the second contact point are electrically connected to each other, it may be judged that the second current distance between the first end and the second end of the flexible screen assembly 30 is more appropriate, the flexible screen assembly 30 is in the unfolded state, and the processor 70 may enable the first antenna radiator 50 to transmit a wireless signal.

For another example, the detection assembly 90 may also include a third contact point and a fourth contact point. The third contact point is arranged on the rotating shaft 65, and the fourth contact point is arranged on the second carrier 20. The relative positions of the third contact point and the fourth contact point may be reasonably arranged. In this way, when the rotating shaft 65 rotates clockwise, a time duration during which the third contact point contacts the fourth contact point is t1; when the rotating shaft 65 rotates counterclockwise, a time duration during which the third contact point contacts the fourth contact point is t2, and t1 is different from t2. During actual detection process, the rotation direction of the rotating shaft 65 may be determined by the time duration during which the third contact point is electrically connected to the fourth contact point.

Based on this, in the electronic device 100 in the embodiments of the present disclosure, the fixing part 91 of the detection assembly 90 is connected to the first carrier 10, the moving part 92 of the detection assembly 90 is connected to the flexible screen assembly 30. The moving part 92 may move synchronously with the flexible screen assembly 30, so that the fixing part 91 may obtain the second current distance between the first end and the second end of the flexible screen assembly 30 according to the motion parameter of the moving part 92, and then the first current distance between the first antenna radiator 50 and the circuit board 40 may be obtained. Moreover, in the embodiments of the present disclosure, the moving part 92 does not move linearly along with the flexible screen assembly 30, the relative position between the fixing part 91 and the moving part 92 is fixed, the magnetic field between the fixing part 91 and the moving part 92 is more stable, and the rotation parameter of the moving part 92 detected by the fixing part 91 is more accurate.

It may be understood that, in the above embodiments, a part of the detection assembly 90 is connected with the flexible screen assembly 30 to detect the second current distance between the first end and the second end of the flexible screen assembly 30. In practice, a part of the detection assembly 90 may also be connected to the second carrier 20 to detect a displacement parameter of the relative movement between the second carrier 20 and the first carrier 10. The processor 70 may also control the working state of the first antenna radiator 50 and the second antenna radiator 80 according to the displacement parameter detected by the component 90.

It may be understood that, the scheme of detecting the second current distance between the first end and the second end of the flexible screen assembly 30 by the detection assembly 90 may be referenced by the scheme of detecting the displacement parameter of the second carrier 20 by the detection assembly 90. The difference lies in that in this scheme, the moving part 92 of the detection assembly 90 is disposed on the second carrier 20. The scheme will not be repeated again.

The detection assembly 90 may be electrically connected to the processor 70. When the detection assembly 90 detects the second current distance between the first end and the second end of the flexible screen assembly 30, or the first current distance between the first antenna radiator 50 and the circuit board 40, or the rotation parameter of the rotating shaft 65, the processor 70 may directly determine that the flexible screen assembly 30 is in the unfolded state or the folded state according to the second current distance, the first current distance, and the rotation parameter. The processor 70 may further control the working states of the first antenna radiator 50 and the second antenna radiator 80 according to the unfolded state or the folded state of the flexible screen assembly 30.

It may be understood that the processor 70 may also control the working states of the first antenna radiator 50 and the second antenna radiator 80 according to a first distance/second distance-state mapping table. For example, the first distance/second distance-state mapping table may be pre-stored inside the electronic device 100, and different first current distance ranges/second current distance ranges and the working states of the first antenna radiator 50 and the second antenna radiator 80 corresponding to the first current distance ranges/second current distance ranges are pre-stored in the mapping table. For example, when the first current distance/second current distance is within a first range, the second antenna radiator 80 is enabled to transmit a wireless signal; when the first current distance/second current distance is within a second range, the first antenna radiator 50 and the second antenna radiator 80 are enabled to transmit a wireless signal; and when the first current distance/second current distance is in a third range, the first antenna radiator 50 is enabled to transmit a wireless signal.

It may be understood that the above is only an illustrative example of the processor 70 to control the working states of the first antenna radiator 50 and the second antenna radiator 80 according to the first current distance, the second current distance, and the rotation parameter. Other solutions that enable the processor 70 to control the working states of the first antenna radiator 50 and the second antenna radiator 80 according to the states of the flexible screen assembly 30 are not limited to this and are within the protection scope of the embodiments of the present disclosure.

According to the electronic device 100 of the embodiments of the present disclosure, the processor 70 may control the working states of the first antenna radiator 50 and the second antenna radiator 80 based on the first current distance, the second current distance, and the rotation parameter detected by the detection assembly 90. The processor 70 may rationally arrange operations of the first antenna radiator 50 and the second antenna radiator 80 according to the interference situation of the electronic device 100, so as to improve the overall radiation performance of the electronic device 100.

Based on the above-mentioned structure of the electronic device 100, an embodiment of the present disclosure further provides an electronic device control method. The method may be applied to the electronic device 100 in any of the foregoing embodiments. FIG. 11 is a schematic flowchart of the electronic device control method according to an embodiment of the present disclosure. The electronic device control method in some embodiments of the present disclosure is applied to the above-mentioned electronic device 100. As shown in FIG. 11, the electronic device control method includes the following operations.

In an operation 101, the method includes obtaining the unfolded state or the folded state of the flexible screen assembly.

According to the electronic device 100 of the embodiments of the present disclosure, the second carrier 20 is slidably connected to the first carrier 10, and the second carrier 20 may be close to or away from the first carrier 10. A first end of the flexible screen assembly 30 is disposed on the first carrier 10, and a second end of the flexible screen assembly 30 opposite to the first end is disposed on the second carrier 20. When the first carrier 10 and the second carrier 20 are moving close to each other, the flexible screen assembly 30 may be in the folded state. When the first carrier 10 and the second carrier 20 are moving away from each other, the flexible screen assembly 30 may be in the unfolded state.

It may be understood that the electronic device 100 may obtain the first current distance between the first antenna radiator 50 and the circuit board 40 through the detection assembly 90, so as to judge the current states of the first antenna radiator 50 and the circuit board 40 according to the first current distance.

It may be understood that the electronic device 100 may also obtain the second current distance between the first end and the second end of the flexible screen assembly 30 through the detection assembly 90, so as to judge the current states of the first antenna radiator 50 the circuit board 40 according to the second current distance.

It may be understood that the electronic device 100 may detect the rotation parameter of the rotating shaft 65 through the detection assembly 90, so as to judge the current states of the first antenna radiator 50 and the circuit board 40 according to the rotating parameter of the rotating shaft 65.

It may be understood that, the solution of detecting the first current distance, the second current distance, and the rotation parameter by the detection assembly 90 may be referred to the foregoing description, and details will not be repeated here.

In an operation 102, the method includes controlling the first antenna radiator to transmit a wireless signal when the flexible screen assembly is in the unfolded state.

After the electronic device 100 obtains the second current distance between the first end and the second end of the flexible screen assembly 30, or the first current distance between the first antenna radiator 50 and the circuit board 40, or the rotation parameter of the rotating shaft 65, the electronic device 100 may determine the current states of the first antenna radiator 50 and the circuit board 40 according to the first current distance, the second current distance, and the rotation parameter.

When the flexible screen assembly 30 is in the unfolded state, the electronic device 100 may enable the first antenna radiator 50 to transmit a wireless signal. At this time, the distance between the first antenna 50 and the first carrier 10 is relatively long, so the first antenna radiator 50 has a better radiation performance.

In some embodiments, the electronic device 100 may also enable the first antenna radiator 50 to transmit a wireless signal when the flexible assembly 30 is in the unfolded state and the flexible screen assembly 30 and the first antenna radiator 50 are staggered from each other. In this case, the distance between the first antenna radiator 50 and the flexible screen assembly 30 is relatively long, the first antenna radiator 50 is less interfered by the flexible screen assembly 30, and the radiation performance of the first antenna radiator 50 is better.

According to the electronic device 100 of the embodiments of the present disclosure, when the flexible screen assembly 30 is in the unfolded state, the distance between the first antenna radiator 50 and the first carrier 10 is relatively long, and the first antenna radiator 50 is not easily interfered by the electronic components integrated in the first carrier 10. The clearance area of the first antenna radiator 50 is larger, and the radiation performance of the first antenna radiator 50 is better.

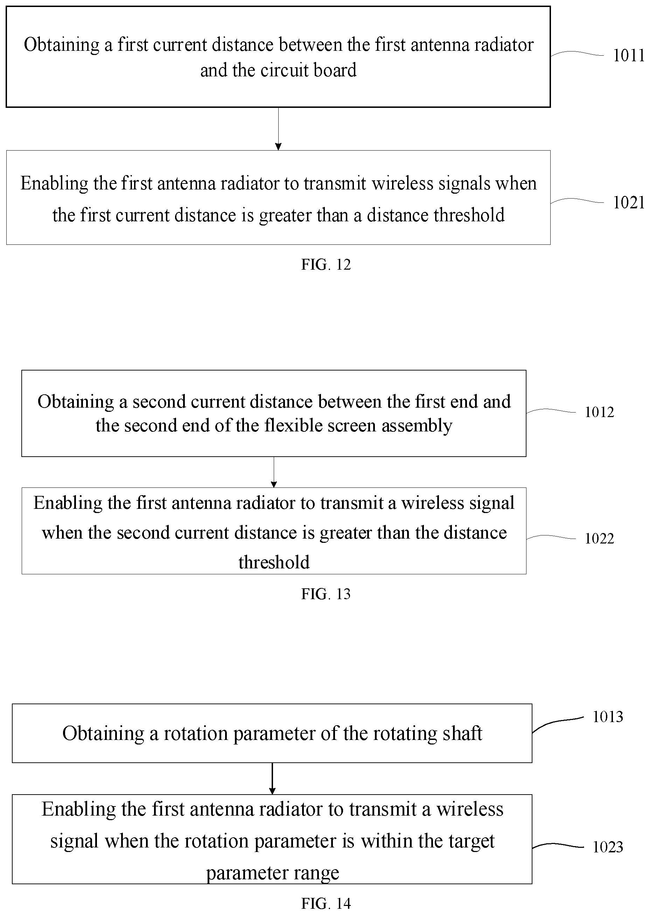

FIG. 12 is a second schematic flowchart of the electronic device control method according to an embodiment of the present disclosure. As shown in FIG. 12, the electronic device control method also includes the following operations.

In an operation 1011, the method includes obtaining the first current distance between the first antenna radiator and the circuit board.

In an operation 1021, the method includes enabling the first antenna radiator to transmit a wireless signal when the first current distance is greater than a first distance threshold.

The electronic device 100 may obtain the first current distance between the first antenna radiator 50 and the circuit board 40 through the detection assembly 90. If the first current distance is greater than or equal to the first distance threshold, the electronic device 100 may consider that the first antenna radiator 50 and the circuit board 40 are away from each other, and then may enable the first antenna radiator 50 to transmit a wireless signal. If the first current distance is less than the first distance threshold, the electronic device 100 may consider that the first antenna radiator 50 and the circuit board 40 are close to each other, and the electronic device 100 may control the first antenna radiator 50 not to transmit a wireless signal, or to transmit signals as an auxiliary antenna.

FIG. 13 is a third schematic flowchart of the device control method according to an embodiment of the present disclosure. As shown in FIG. 13, the electronic device control method also includes the following operations.

In an operation 1012, the method includes obtaining the second current distance between the first end and the second end of the flexible screen assembly.

In an operation 1022, the method includes enabling the first antenna radiator to transmit a wireless signal when the second current distance is greater than the second distance threshold.

The electronic device 100 may obtain the second current distance between the first end and the second end of the flexible screen assembly 30 through the detection assembly 90.

When the second current distance is greater than or equal to the second distance threshold, the electronic device 100 may consider that the first antenna radiator 50 and the first carrier 10 are away from each other, and the electronic device 100 may enable the first antenna radiator 50 to transmit a wireless signal. When the second current distance is less than the second distance threshold, the electronic device 100 may consider that the first antenna radiator 50 and the first carrier 10 are close to each other, and the electronic device 100 may control the first antenna radiator 50 not to transmit a wireless signal (i.e., disenable the first antenna radiator 50 to transmit a wireless signal), or to transmit a wireless signal as an auxiliary antenna.

FIG. 14 is a fourth schematic flowchart of the device control method according to an embodiment of the present disclosure. As shown in FIG. 14, the electronic device control method also includes the following operations.

In an operation 1013, the method includes obtaining the rotation parameter of the rotating shaft.

In an operation 1023, the method includes enabling the first antenna radiator to transmit a wireless signal when the rotation parameter is within the target parameter range.

The electronic device 100 may obtain the rotation parameter of the rotating shaft through the detection assembly 90. The electronic device 100 may enable the first antenna radiator 50 to transmit a wireless signal when the rotation parameter is within the target parameter range. For example, the target parameter range may be that the rotation direction of the rotating shaft 65 is clockwise. In this case, if the rotating shaft 65 rotates clockwise, the electronic device 100 may consider that the rotation parameter of the rotating shaft 65 is within the target parameter range, the first antenna radiator 50 and the circuit board 40 are away from each other, and the electronic device 100 may enable the first antenna radiator 50 to transmit a wireless signal. If the rotating shaft 65 rotates counterclockwise, the first antenna radiator 50 and the circuit board 40 are close to each other, and the electronic device 100 may control the first antenna radiator 50 not to transmit a wireless signal, or to transmit a wireless signal as the auxiliary antenna.

It may be understood that the electronic device 100 may also include a second antenna radiator 80. Detailed information of the second antenna radiator 80 may be referred to the second antenna radiator 80 described above. The scheme of enabling the second antenna radiator 80 by the electronic device 100 may refer to the foregoing scheme in which the processor 70 controls the second antenna radiator 80, which will not be repeated here.

The electronic device control method of the embodiments of the present disclosure controls the working states of the first antenna radiator 50 according to the current distance/displacement parameter/rotation parameter, and the electronic device 100 may reasonably control the working state of the first antenna radiator 50 according to the interference situation of the circuit board 40 to the first antenna radiator 50, thereby improving the radiation performance of the first antenna radiator 50.

The electronic device and the electronic device control method provided by the embodiments of the present disclosure are described above in detail. In the present disclosure, examples are used to illustrate the principles and implementation methods of the present disclosure, and the descriptions of the above embodiments are only used to help understand the present disclosure. Apparently, the described embodiments are only some of the embodiments of the present disclosure, not all of them. Based on the embodiments in the present disclosure, all other embodiments obtained by those skilled in the art without making creative efforts belong to the scope of protection of the present disclosure. At the same time, for those skilled in the art, based on the idea of the present disclosure, there will be changes in the specific implementation and the application scope. In summary, the content of this specification should not be construed as limiting the present disclosure.

## Claims

1. An electronic device, comprising:
a first carrier;
a second carrier, slidably connected to the first carrier and movable towards the first carrier or away from the first carrier;
a flexible screen assembly, having a first end and a second end opposite to the first end, wherein the first end of the flexible screen assembly is arranged on the first carrier, the second end of the flexible screen assembly is arranged on the second carrier, and the flexible screen assembly is switchable between a folded state and an unfolded state as the first carrier and the second carrier move towards or away from each other; and
a first antenna radiator, arranged on the second carrier, wherein when the second carrier is away from the first carrier and the flexible screen assembly is in the unfolded state, the first antenna radiator is enabled to transmit a wireless signal.

2. The electronic device according to claim 1, further comprising:
a circuit board, disposed on the first carrier; and
a processor, arranged on the circuit board and electrically connected to the first antenna radiator, wherein the processor is configured to enable the first antenna to transmit the wireless signal when the flexible screen assembly is in the unfolded state.

3. The electronic device according to claim 2, wherein the processor is further configured to:
enable the first antenna radiator to transmit the wireless signal when a distance between the first end of the flexible screen assembly and the second end of the flexible screen assembly is greater than a distance threshold.

4. The electronic device according to claim 2, wherein the processor is further configured to:
enable the first antenna radiator to transmit the wireless signal when a distance between the first antenna radiator and the first circuit board is greater than a distance threshold.

5. The electronic device according to claim 2, wherein the processor is further configured to:
enable the first antenna radiator to transmit the wireless signal when the flexible screen assembly is in the unfolded state and staggered from the first antenna radiator.

6. The electronic device according to claim 2, further comprising:
a rotating shaft, arranged on the second carrier, wherein the second end of the flexible screen assembly surrounds the rotating shaft and is connected to the second carrier, and the rotating shaft is rotatable along with the flexible screen assembly;
wherein the processor is further configured to enable the first antenna radiator to transmit the wireless signal when a rotation parameter of the rotating shaft is within a target parameter range.

7. The electronic device according to claim 1, further comprising:
an electrical connector, comprising a first electrical connecting part, a rotating part, and a second electrical connecting part connected in sequence, wherein the first electrical connecting part is electrically connected to the circuit board, the second electrical connecting part is electrically connected to the first antenna radiator, and the second electrical connecting part and the rotating part are rotatable along with the second carrier.

8. The electronic device according to claim 7, wherein the rotating part is configured to rotate from a first helical shape to a second helical shape, or the rotating part is configured to rotate from the second helical shape to the first helical shape; wherein the number of turns of the first helical shape is less than the number of turns of the second helical shape.

9. The electronic device according to claim 1, wherein the first carrier comprises a first bottom plate, a first side wall, and a first top plate, and the first side wall is connected to the first bottom plate and the first top plate;
wherein the second carrier comprises a second bottom plate, a second side wall, and a second top plate, and the second side wall is connected to the second bottom plate and the second top plate; and
wherein the first top plate, the second top plate, the first bottom plate, the second bottom plate, the first side wall, and the second side wall cooperatively define an accommodating space.

10. The electronic device according to claim 9, further comprising a circuit board, wherein the circuit board is arranged in the accommodating space and the first antenna radiator is arranged outside the accommodating space.

11. The electronic device according to claim 9, wherein the second end of the flexible screen assembly surrounds the second side wall from the second top plate and extends to the outer surface of the second bottom plate, and the first antenna radiator is arranged on the outer surface of the second bottom plate.

12. The electronic device according to claim 11, wherein when the flexible screen assembly is in the unfolded state, the second end of the flexible screen assembly is spaced apart from the first antenna radiator, and the second end of the flexible screen assembly is staggered from the first antenna radiator.

13. The electronic device according to claim 1, further comprising a detection assembly, wherein the detection assembly comprises a fixing part and a moving part spaced apart from each other, the fixing part is connected to the first carrier, the moving part is connected to the flexible screen assembly and movable synchronously with the flexible screen assembly, and the fixing part is configured to detect a movement state of the moving part, such that the detection assembly is able to detect a current state of the flexible screen assembly.

14. The electronic device according to claim 13, wherein the fixing part is a Hall angle sensor and the moving part is a circular magnet.

15. The electronic device according to claim 1, further comprising:
a second antenna radiator, arranged on the first carrier, wherein the second antenna radiator is enabled to transmit the wireless signal when the second carrier is close to the first carrier and the flexible screen assembly is in the folded state.

16. An electronic device control method, applied to an electronic device, wherein the electronic device comprises a flexible screen assembly, a first carrier, a second carrier slidably connected to the first carrier, and a first antenna radiator disposed on the second carrier; wherein the flexible screen assembly is switchable between a folded state and an unfolded state as the first carrier and the second carrier slide relative to each other; and wherein the electronic device control method comprises:
obtaining the unfolded state or the folded state of the flexible screen assembly; and
enabling the first antenna radiator to transmit a wireless signal when the flexible screen assembly is in the unfolded state.

17. The electronic device control method according to claim 16, wherein obtaining the unfolded state or the folded state of the flexible screen assembly comprises:
obtaining a first current distance between the first antenna radiator and the first circuit board;
wherein enabling the first antenna radiator to transmit a wireless signal when the flexible screen assembly is in the unfolded state comprises:
enabling the first antenna radiator to transmit the wireless signal when the first current distance is greater than a distance threshold.

18. The electronic device control method according to claim 16, wherein obtaining the unfolded state or the folded state of the flexible screen assembly comprises:
obtaining a second current distance between a first end of the flexible screen assembly and a second end of the flexible screen assembly;
wherein enabling the first antenna radiator to transmit a wireless signal when the flexible screen assembly is in the unfolded state comprises:
enabling the first antenna radiator to transmit the wireless signal when the second current distance is greater than a distance threshold.

19. The electronic device control method according to claim 16, wherein enabling the first antenna radiator to transmit a wireless signal when the flexible screen assembly is in the unfolded state comprises:
enabling the first antenna radiator to transmit the wireless signal when the flexible screen assembly is in the unfolded state and staggered from the first antenna radiator.

20. The electronic device control method according to claim 16, wherein the electronic device further comprises a rotating shaft arranged on the second carrier, a second end of the flexible screen assembly surrounds the rotating shaft and is connected to the second carrier, and the rotating shaft is configured to rotate with the movement of the flexible screen assembly;
wherein obtaining the unfolded state or the folded state of the flexible screen assembly comprises:
obtaining a rotation parameter of the rotating shaft;
wherein enabling the first antenna radiator to transmit a wireless signal when the flexible screen assembly is in the unfolded state comprises:
enabling the first antenna radiator to transmit a wireless signal when the rotation parameter is within the target parameter range.
